(19) Europäisches Patentamt
European Patent Office
Office européen des brevets

(11) **EP 2 955 968 A2**

(12) **EUROPEAN PATENT APPLICATION**

(43) Date of publication:
**16.12.2015 Bulletin 2015/51**

(51) Int Cl.:
***H04W 72/04*** *(2009.01)*    ***H04L 5/00*** *(2006.01)*

(21) Application number: **15171778.2**

(22) Date of filing: **12.06.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **12.06.2014 US 201462011051 P**

(71) Applicant: **HTC Corporation
Taoyuan City 330 (TW)**

(72) Inventor: **WU, Chih-Yao
330, Taoyuan District, Taoyuan City (TW)**

(74) Representative: **Klang, Alexander H.
Wagner & Geyer
Gewürzmühlstrasse 5
80538 München (DE)**

(54) **DEVICE OF HANDLING SUBFRAME ALLOCATION TO A MTC DEVICE**

(57)     A communication device for indicating a subframe allocation to a machine type communication (MTC) device comprises a storage unit for storing instructions and a processing means coupled to the storage unit. The processing means is configured to execute the instructions stored in the storage unit. The instructions comprise selecting at least one subframe group from a plurality of subframe groups; determining a plurality of subframe allocation bits corresponding to the least one subframe group; and transmitting the plurality of subframe allocation bits to the MTC device, to indicate the at least one subframe group to the MTC device.

FIG. 4

**Description**

Background of the Invention

1. Field of the Invention

The present invention is related to a communication device used in a wireless communication system, and more particularly, to a communication device of indicating a subframe allocation in a wireless communication system.

2. Description of the Prior Art

A long-term evolution (LTE) system supporting the 3rd Generation Partnership Project (3GPP) Rel-8 standard and/or the 3GPP Rel-9 standard are developed by the 3GPP as a successor of a universal mobile telecommunications system (UMTS), for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint (CoMP) transmission/reception, uplink multiple-input multiple-output (UL-MIMO), etc. For a UE and an eNB to communicate with each other in the LTE-A system, the UE and the eNB must support standards developed for the LTE-A system, such as the 3GPP Rel-10 standard or later versions.

A machine type communication (MTC) device which can automatically perform predefined jobs and report corresponding results to other devices, a server, a NB or an eNB can be used in various areas, such as security, tracking and tracing, payment, healthcare, metering, etc. Further, the MTC device preferably reports the corresponding results via a wireless link such that limitation caused by environment can be removed. However, the wireless link used by the MTC device is needed to be established, and radio resource required by the wireless link is needed to be allocated (i.e., assigned). Reuse of existing infrastructures and wireless communication systems become a viable choose for operation of the MTC device. Therefore, the UMTS, the LTE system and the LTE-A system, etc., developed by the 3GPP which are widely deployed are suitable for the operation of the MTC device.

Coverage improvement is a desirable feature for MTC devices in deep indoor environment. A promising technique for achieving the coverage improvement is repetition of transmissions. Proper scheduling is necessary for realizing the repetition of transmissions. In legacy 3GPP standards, a data channel is scheduled by a control channel in the same subframe. Considering repetition of data transmissions, since the number of repetitions may be huge and the repetition may also be applied to the control channel, the data channel may not be able to be scheduled by the control channel in the same subframe according to the legacy rule, e.g., continuous repetition of transmissions may block transmissions for non-MTC devices. In other words, more flexibility on the scheduling timing is necessary.

On the other hand, in legacy 3GPP systems, a control channel only schedules a data channel in one subframe, with the emergence of repetition, an extension of downlink (DL) control information (DCI) is necessary. It should be noted that there is no strong requirement on a latency of a MTC transmission. A cross-subframe scheduling may be suitable for the MTC transmission. Thus, a well-structured subframe allocation is needed to solve the cross-subframe scheduling and the repetition of transmissions.

Summary of the Invention

The present invention therefore provides a communication device for indicating a subframe allocation to solve the abovementioned problem.

A communication device for indicating a subframe allocation to a machine type communication (MTC) device comprises a storage unit for storing instructions and a processing means coupled to the storage unit. The processing means is configured to execute the instructions stored in the storage unit. The instructions comprise selecting at least one subframe group from a plurality of subframe groups; determining a plurality of subframe allocation bits corresponding to the least one subframe group; and transmitting the plurality of subframe allocation bits to the MTC device, to indicate the at least one subframe group to the MTC device.

A communication device for indicating a subframe allocation to a machine type communication (MTC) device comprises a storage unit for storing instructions and a processing means coupled to the storage unit. The processing means is configured to execute the instructions stored in the storage unit. The instructions comprise selecting a plurality of subframes from potential scheduled subframes; determining a starting subframe of the plurality of subframes and a length of the plurality of subframes; and transmitting an indication corresponding to the starting subframe and the length of the plurality of subframes to the MTC device, to indicate the plurality of subframes to the MTC device.

A communication device for indicating a subframe allocation to a machine type communication (MTC) device comprises a storage unit for storing instructions and a processing means coupled to the storage unit. The processing means is configured to execute the instructions stored in the storage unit. The instructions comprise selecting at least one subframe group from potential scheduled subframes; determining at least one starting subframe of the at least one subframe group and at least one ending subframe of the at least one subframe group; and transmitting a combinatorial index corresponding to the at least one starting subframe and the length to the MTC device, to indicate the at least one subframe group to the MTC device.

These and other objectives of the present invention will no doubt become obvious to those of ordinary skill in the art after reading the following detailed description of the preferred embodiment that is illustrated in the various figures and drawings.

Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a schematic diagram of a subframe allocation via a bitmap according to an example of the present invention.
Fig. 5 is a flowchart of a process according to an example of the present invention.
Fig. 6 is a flowchart of a process according to an example of the present invention.
Fig. 7 is a schematic diagram of a subframe allocation via a starting subframe and a length of allocated subframes according to an example of the present invention.
Fig. 8 is a flowchart of a process according to an example of the present invention.
Fig. 9 is a flowchart of a process according to an example of the present invention.
Fig. 10 is a schematic diagram of a subframe allocation via starting subframes and ending subframes of allocated subframes according to an example of the present invention.
Fig. 11 is a schematic diagram of a subframe allocation via starting subframes of allocated subframes according to an example of the present invention.
Fig. 12 is a flowchart of a process according to an example of the present invention.
Fig. 13 is a flowchart of a process according to an example of the present invention.
Fig. 14 is a schematic diagram of a subframe allocation via a subframe subset, a shift and a bitmap according to an example of the present invention.
Fig. 15 is a flowchart of a process according to an example of the present invention.

Detailed Description

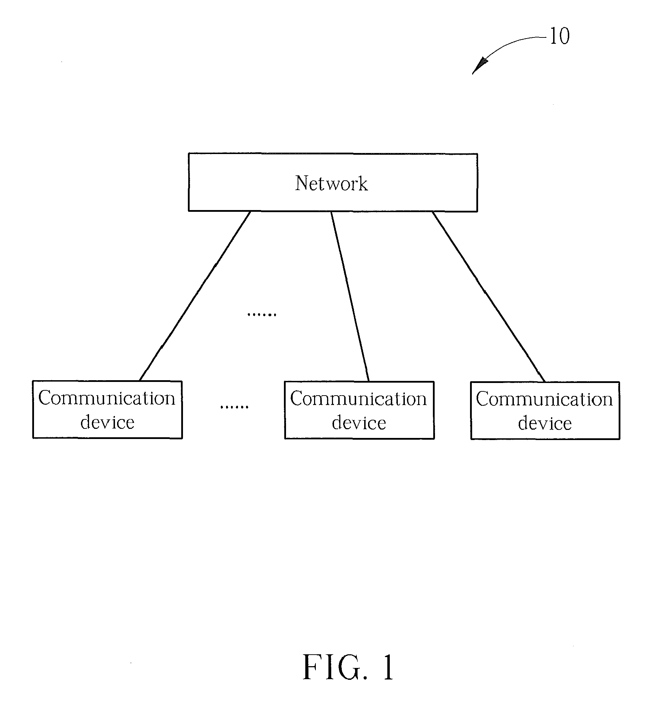

Please refer to Fig. 1, which is a schematic diagram of a wireless communication system 10 according to an example of the present invention. The wireless communication system 10 is briefly composed of a network and a plurality of communication devices. The wireless communication system 10 may support a time-division duplexing (TDD) mode, a frequency-division duplexing (FDD) mode or a TDD-FDD joint operation mode. That is, the network and a communication device may communicate with each other via FDD carrier (s) and/or TDD carrier (s) . In addition, the wireless communication system 10 may support a carrier aggregation (CA). That is, the network and a communication device may communicate with each other via multiple cells (e.g., multiple carriers) including a primary cell (e.g., primary component carrier (PCC)) and one or more secondary cells (e.g., secondary component carriers (SCCs)). The abovementioned cells may be operated in the same or different duplexing modes. For example, each cell may be a FDD cell (or TDD cell), when the cells are operated in the same duplexing mode. There are also several scenarios, when the cells are operated in different duplexing modes (e.g. TDD-FDD joint operation). For example, the primary cell may be operated on a TDD carrier, while a secondary cell may be operated on a FDD carrier. In another example, the primary cell may be operated on the FDD carrier, while the secondary cell may be operated on the TDD carrier.

In Fig. 1, the network and the communication devices are simply utilized for illustrating the structure of the wireless communication system 10. Practically, the network may be a universal terrestrial radio access network (UTRAN) comprising a plurality of Node-Bs (NBs) in a universal mobile telecommunications system (UMTS). In another example, the network may be an evolved UTRAN (E-UTRAN) including at least one evolved NB (eNB) and/or at least one relay in a long term evolution (LTE) system, a LTE-Advanced (LTE-A) system or an evolution of the LTE-A system.

Furthermore, the network may also include both the UTRAN/E-UTRAN and a core network, wherein the core network may include network entities such as Mobility Management Entity (MME), Serving Gateway (S-GW), Packet Data Network (PDN) Gateway (P-GW), Self-Organizing Networks (SON) server and/or Radio Network Controller (RNC), etc. In other words, after the network receives information transmitted by a communication device, the information may be processed only by the UTRAN/E-UTRAN and decisions corresponding to the information are made at the UTRAN/E-UTRAN. Alternatively, the UTRAN/E-UTRAN may forward the information to the core network, and the decisions corresponding to the information are made at the core network after the core network processes the information. In addition, the information may be processed by both the UTRAN/E-UTRAN and the core network, and the decisions are made after coordination and/or cooperation are performed by the UTRAN/E-UTRAN and the core network.

A communication device may be a user equipment (UE), a low cost device (e.g., machine type communication (MTC) device), a device-to-device (D2D) device, a mobile phone, a laptop, a tablet computer, an electronic book, a portable computer system, or combination thereof. In addition, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

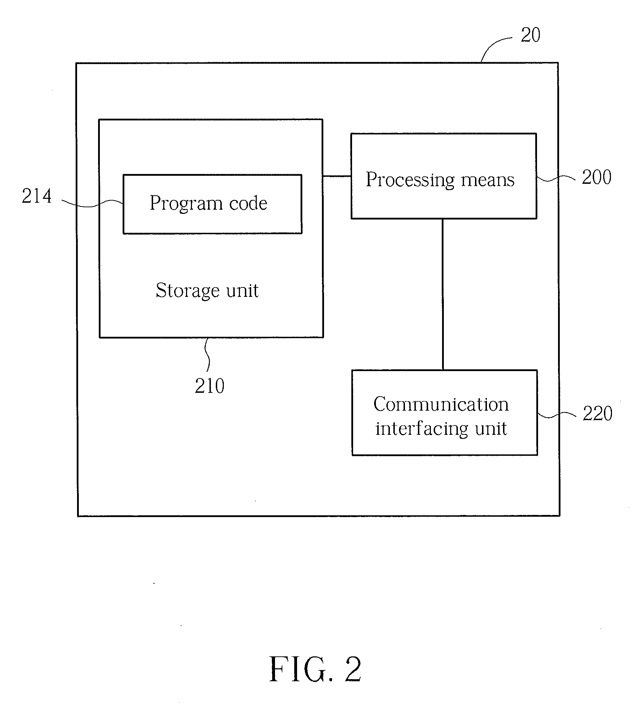

Fig. 2 is a schematic diagram of a communication device 20 according to an example of the present invention. The communication device 20 may be used for realizing a communication device and/or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, messages and/or packets) according to processing results of the processing means 200.

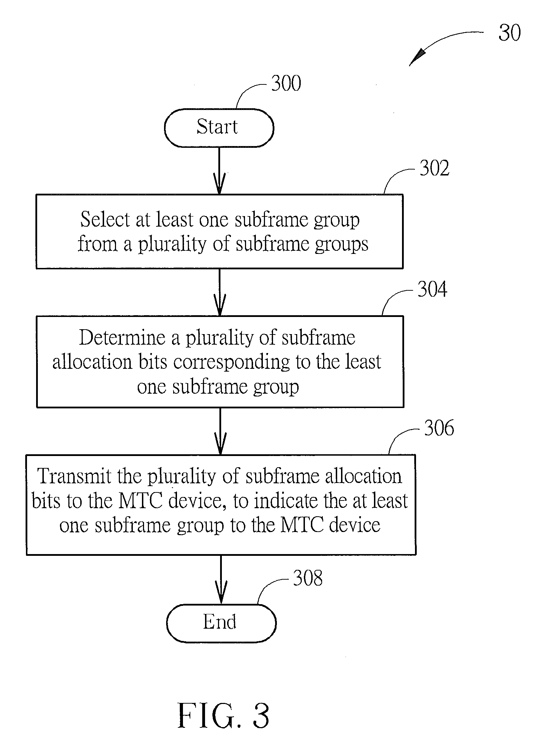

Fig. 3 is a flowchart of a process 30 according to an example of the present invention. The process 30 may be utilized in the network (e.g., an eNB) shown in Fig. 1, to indicate a subframe allocation to a MTC device. The process 30 may be compiled into the program code 214 and includes the following steps:

> Step 300: Start.
> Step 302: Select at least one subframe group from a plurality of subframe groups.
> Step 304: Determine a plurality of subframe allocation bits corresponding to the least one subframe group.
> Step 306: Transmit the plurality of subframe allocation bits to the MTC device, to indicate the at least one subframe group to the MTC device.
> Step 308: End.

According to the process 30, the network selects at least one subframe group from a plurality of subframe groups, and determines a plurality of subframe allocation bits corresponding to the least one subframe group. Then, the network transmits the plurality of subframe allocation bits to the MTC device, to indicate the at least one subframe group to the MTC device. That is, the at least one subframe group is allocated to the MTC device by using the subframe allocation bits, wherein a subframe group may include one or more subframes. Thus, the subframe(s) is allocated to the MTC device efficiently.

Realization of the present invention is not limited to the above description.

In one example, a size of each of the plurality of subframe groups may be a first fixed value (e.g., predetermined value), may be a first function of a repetition level of MTC transmission, may be a first function of a total number of potential scheduled subframes, may be indicated by a first DL control information (DCI), or may be configured by a first radio resource control (RRC) signalling. That is, the number of subframes in a subframe group may be determined according any of the above methods, and is not limited herein. Further, the total number of potential scheduled subframes may be a second fixed value (e.g., predetermined value), may be a second function of the repetition level of MTC transmission, may be a second function of the total number of potential scheduled subframes, may be indicated by a second DCI, or may be configured by a second RRC signalling. That is, the total number of subframes which may be available for the MTC may be determined according any of the above methods, and is not limited herein. It should be noted that the first DCI and the second DCI may be the same DCI, and the first RRC signalling and the second RRC signalling may be the same signalling.

In one example, the plurality of subframe allocation bits in the process 30 may include a bitmap. That is, the subframe allocation bits may simply be a bitmap wherein each bit in the bitmap maps to a corresponding subframe group. For example, a bit "1" means that the corresponding subframe group is allocated, while a bit "0" means that the corresponding subframe group is not allocated

In one example, each of the at least one subframe group may include consecutive subframes. That is, a subframe group may include (e.g., only) consecutive subframes. In one example, the plurality of subframe allocation bits may be transmitted via in a DCI to the MTC device. In one example, the at least one subframe group may be allocated for a physical DL shared channel (PDSCH) or a physical UL shared channel (PUSCH) . That is, the MTC device may receive the PDSCH or transmit the PUSCH via the at least one subframe group indicated by the network.

Furthermore, the total number of subframe groups ($N_{SG}$) may be obtained according to $N_{SG} = \lceil N_{Subframe}/S \rceil$, where $N_{Subframe}$ denotes the total number of potential scheduled subframes and each subframe group is of a size S. If $N_{Subframe} \bmod S > 0$ is satisfied, one of the subframe groups is of a size $N_{Subframe} - S \cdot \lfloor N_{Subframe}/S \rfloor$. The bitmap may be of a size $N_{SG}$ bits, where one bitmap bit per subframe group such that each subframe group is addressable. Starting at a first subframe, the subframe groups may be indexed in the order of increasing time and non-increasing subframe group sizes. The mapping between the subframe groups and the bitmap bits may be determined in a way that the subframe groups 0 to ($N_{SG}$-1) are mapped to a most significant bit (MSB) to a least significant bit (LSB) of the bitmap. For example, the subframe group is allocated to a MTC device, if a corresponding bit in the bitmap is 1. The subframe group is not allocated to the MTC device, if a corresponding bit in the bitmap is 0. The first subframe of the potential scheduled subframes may be the subframe where a control channel is completely received or several subframes after the abovementioned subframe (e.g., the first subframe of a next radio frame after the control channel is completely received).

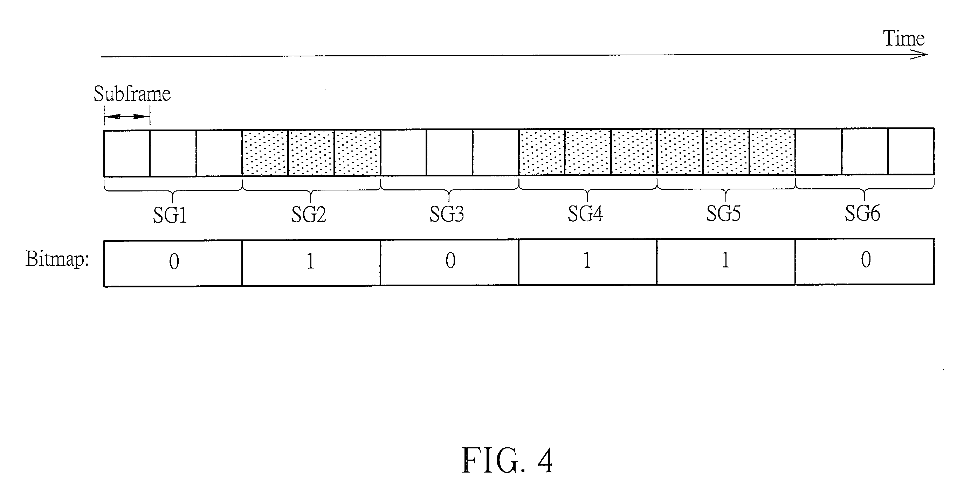

Fig. 4 is a schematic diagram of a subframe allocation via a bitmap according to an example of the present invention. In Fig. 4, a size of a subframe group is 3 subframes, and at most 6 subframe groups SG1-SG6 (i.e., 18 subframes) may be indicated by the network to a MTC device. In one example, the network may determine to allocate the subframe groups SG2, SG4 and SG5 to the MTC device. The network determines a bitmap "010110" where the bits correspond to the subframe groups SG1-SG6, respectively, and transmits the bitmap to the MTC device. The MTC device maps the bitmap to the subframe groups SG1-SG6 in an order of increasing time, after receiving the bitmap transmitted by the network. Then, the MTC device may determine that the subframe groups SG2, SG4 and SG5 are available for receiving the PDSCH (or for transmitting the PUSCH) according to the bitmap.

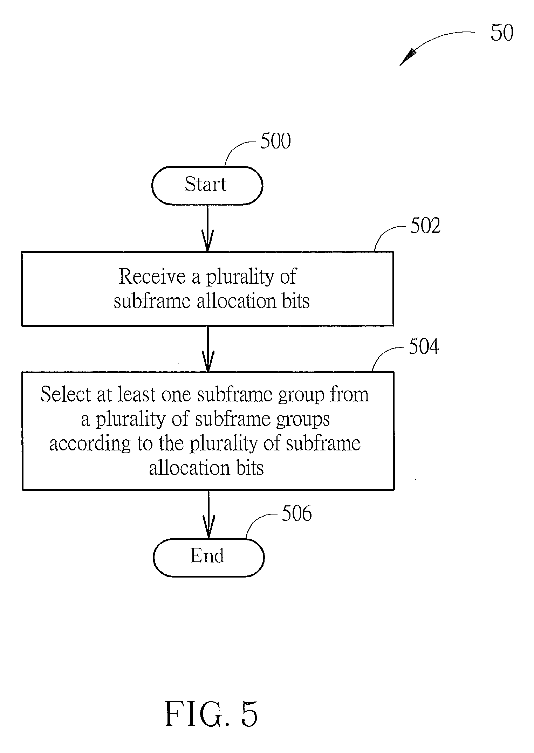

Operations of a MTC device in the above examples can be summarized into a process 50 shown in Fig. 5, and can be compiled into the program code 214. The process 50 includes the following steps:

Step 500: Start.
Step 502: Receive a plurality of subframe allocation bits.
Step 504: Select at least one subframe group from a plurality of subframe groups according to the plurality of subframe allocation bits.
Step 506: End.

Detailed operations and variations of the process 50 can be referred to the above illustration, and are not narrated herein.

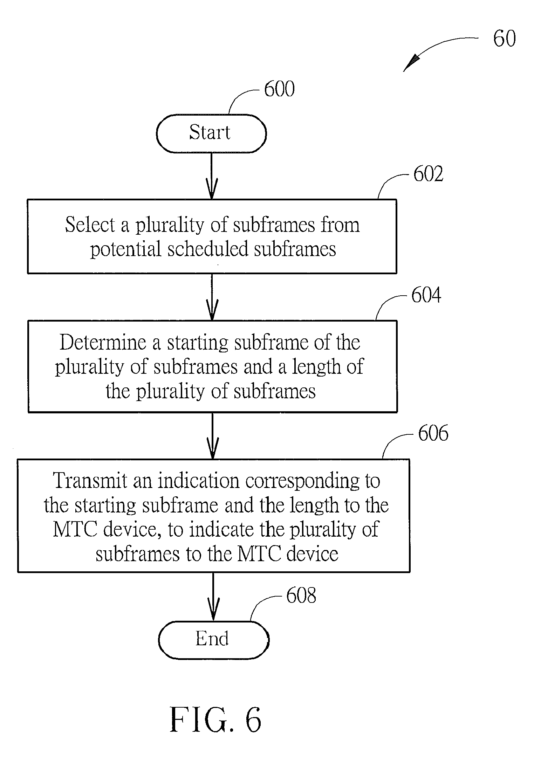

Fig. 6 is a flowchart of a process 60 according to an example of the present invention. The process 60 may be utilized in the network (e.g., an eNB) shown in Fig. 1, to indicate a subframe allocation to a MTC device. The process 60 may be compiled into the program code 214 and includes the following steps:

Step 600: Start.
Step 602: Select a plurality of subframes from potential scheduled subframes.
Step 604: Determine a starting subframe of the plurality of subframes and a length of the plurality of subframes.
Step 606: Transmit an indication corresponding to the starting subframe and the length to the MTC device, to indicate the plurality of subframes to the MTC device.
Step 608: End.

According to the process 60, the network selects a plurality of subframes from potential scheduled subframes, and determines a starting subframe of the plurality of subframes and a length of the plurality of subframes. Then, the network transmits an indication (e.g., subframe indication value (SIV)) corresponding to the starting subframe and the length to the MTC device, to indicate the plurality of subframes to the MTC device. That is, the starting subframe and the length are used for indicating (i.e., allocating) the plurality of subframes to the MTC device. Thus, the subframe(s) is allocated to the MTC device efficiently.

Realization of the present invention is not limited to the above description.

In one example, the plurality of subframes in the process 60 may be consecutive subframes. That is, the length of the plurality of subframes is a number of the plurality of subframes indicated to the MTC device. In another example, the plurality of subframes may be non-consecutive subframes. In this situation, a distance between each two neighboring subframes of the plurality of subframes may a fixed value (e.g., predetermined value), may be indicated by the indication, may be configured by a RRC signalling, or may be a function of the potential scheduled subframes. That is, the distance may be determined according any of the above methods, and is not limited herein. Further, the indication may further correspond to the distance. That is, the indication may indicate the starting subframe, the length and the distance. In one example, the indication may be transmitted via in a DCI to the MTC device. In one example, the plurality of subframes may be allocated for a PDSCH or a PUSCH. That is, the MTC device may receive the PDSCH or transmit the PUSCH via the plurality of subframes indicated by the network.

Furthermore, the indication in the process 60 may be defined according to the following equation

$$\texttt{if} \ \ (L_{Subframes} - 1) \le \left\lfloor N_{Subframe} / 2 \right\rfloor \ \ \texttt{then}$$

$$SIV = N_{Subframe}(L_{Subframes} - 1) + Subframe_{start}$$

$$\texttt{else}$$

$$SIV = N_{Subframe}(N_{Subframe} - L_{Subframes} + 1) + (N_{Subframe} - 1 - Subframe_{start}) \quad (\texttt{Eq.1})$$

where SIV is an indication, $Subframe_{start}$ is a starting subframe, $L_{Subframes}$ is a length of consecutively allocated subframes, and $N_{Subframe}$ is the total number of potential scheduled subframes. In addition, in the equation (Eq. 1), $L_{Subframes} \ge 1$ and $L_{Subframes} \le N_{Subframes}$ - $Subframe_{start}$ should be satisfied.

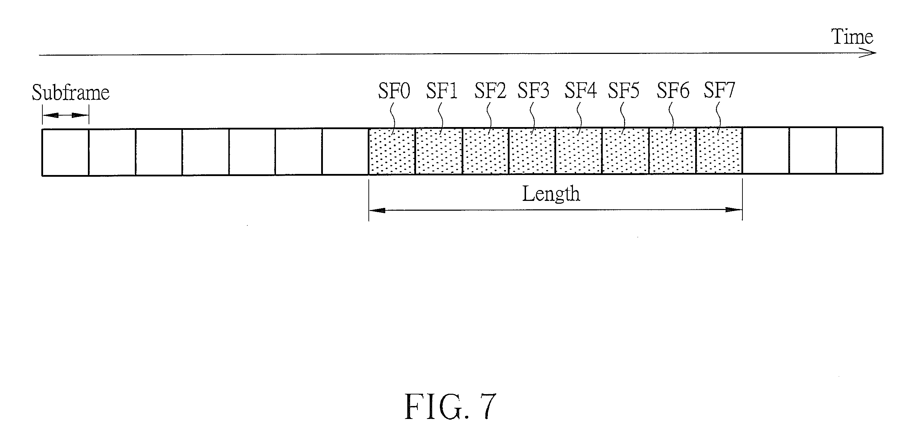

Fig. 7 is a schematic diagram of a subframe allocation via a starting subframe and a length of allocated subframes according to an example of the present invention. In Fig. 7, the network may determine to allocate subframes SF0-SF7 to the MTC device. The network determines an indication corresponding to the subframe SF0 and 8 which is the length of the allocated subframes, and transmits the indication to the MTC device. Then, the MTC device determines that the subframes SF0-SF7 are available for receiving the PDSCH (or for transmitting the PUSCH) according to the indication, after receiving the indication.

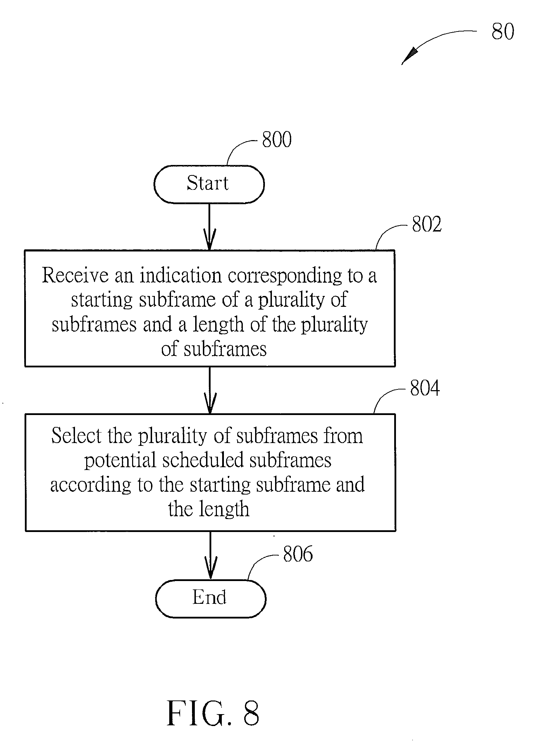

Operations of a MTC device in the above examples can be summarized into a process 80 shown in Fig. 8, and can be compiled into the program code 214. The process 80 includes the following steps :

Step 800: Start.
Step 802: Receive an indication corresponding to a starting subframe of a plurality of subframes and a length of the plurality of subframes.
Step 804: Select the plurality of subframes from potential scheduled subframes according to the starting subframe and the length.
Step 806: End.

Detailed operations and variations of the process 80 can be referred to the above illustration, and are not narrated herein.

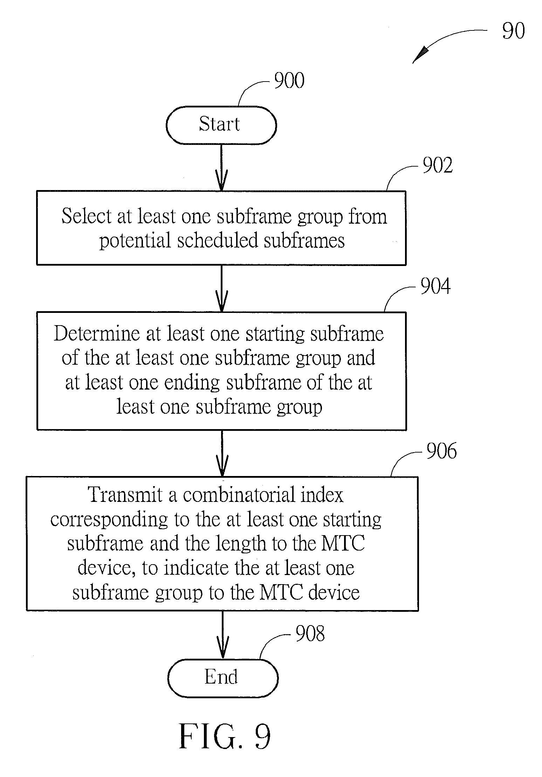

Fig. 9 is a flowchart of a process 90 according to an example of the present invention. The process 90 may be utilized in the network (e.g., an eNB) shown in Fig. 1, to indicate a subframe allocation to a MTC device. The process 90 may be compiled into the program code 214 and includes the following steps:

Step 900: Start.
Step 902: Select at least one subframe group from potential scheduled subframes.
Step 904: Determine at least one starting subframe of the at least one subframe group and at least one ending subframe of the at least one subframe group.
Step 906: Transmit a combinatorial index corresponding to the at least one starting subframe and the length to the MTC device, to indicate the at least one subframe group to the MTC device.
Step 908: End.

According to the process 60, the network selects at least one subframe group from potential scheduled subframes, and determines at least one starting subframe (e.g., at least one index of the at least one starting subframe) of the at least one subframe group and at least one ending subframe (e.g., at least one index of the at least one ending subframe) of the at least one subframe group. Then, the network transmits a combinatorial index corresponding to the at least one starting subframe and the at least one ending subframe to the MTC device, to indicate the at least one subframe group to the MTC device. That is, the combinatorial index representing the at least one starting subframe and the at least one ending subframe is used for indicating (i.e., allocating) to the MTC device.

Realization of the present invention is not limited to the above description.

In one example, a size of each of the at least one subframe group in the process 90 may be one. That is, each of the at least one subframe group may include only one subframe. In this situation, a starting subframe and an ending subframe of a subframe (i.e., subframe group with only one subframe) are the same, and the combinatorial index actually corresponds to only the starting subframe (or the ending subframe). In one example, each of the at least one subframe group may include consecutive subframes. That is, subframe(s) within a starting subframe and an ending subframe are all allocated to the MTC device.

In one example, a number of the at least one subframe group in the process 90 may be a fixed value (e.g., predetermined value), or may be a function of the potential scheduled subframes. That is, the number of the at least one subframe group may be determined according any of the above methods, and is not limited herein. In one example, the combinatorial index may be transmitted via in a DCI to the MTC device. In one example, the at least one subframe group may be allocated for a PDSCH or a PUSCH. That is, the MTC device may receive the PDSCH or transmit the PUSCH via the at least one subframe group (i.e., subframes therein) indicated by the network.

Furthermore, a combinatorial index c may consist of $\left\lceil \log_2\left(\left(\begin{array}{c}\left\lceil N_{Subframe}/S+1\right\rceil \\ 2X\end{array}\right)\right)\right\rceil$ bits, where S is a size of a subframe group, X is the number of selected subframe groups which may be a predetermined value or a function of $N_{Subframe}$, the total number of potential scheduled subframes. The combinatorial index c corresponds to a starting index $x_0$ and an ending index $x_1 - 1$ of a subframe set 1, a starting index $x_2$ and an ending index $x_3 - 1$ of a subframe set 1, and so on. Then, the combinatorial index c may be determined according to the equation $c = \sum_{i=0}^{M-1}\left(\begin{array}{c}N-x_i \\ M-i\end{array}\right)$, where with M=2X and $N = |N_{Subframe}/S + 1|$.

It should be noted that the number of repetition of data transmissions (e.g., PDSCH or PUSCH transmissions) may be implicitly determined in the abovementioned subframe allocations. In other words, the number of scheduled subframes may represent the number of repetition of the data transmissions. Yet, it is possible that the number of repetition of the data transmissions is known beforehand (e. g. , during the MTC configuration or related procedure(s)). In this situation, a MTC device may be indicated only the location information of the scheduled subframe with full scheduling flexibility by a combinatorial index d. The combinatorial index d may consist of $\left\lceil \log_2\left(\left(\begin{array}{c}\left\lceil N_{Subframe}/S+1\right\rceil \\ R/S\end{array}\right)\right)\right\rceil$, where R is the number of repetition of the data transmissions, S is the subframe group size which can be 1, and $N_{Subframe}$ is the total number of potential scheduled subframes. The combinatorial index d may be determined according to the equation $d = \sum_{i=0}^{M-1}\left(\begin{array}{c}N-s_i \\ M-i\end{array}\right)$, where $N = |N_{Subframe}/S + 1|$, M = R/S, and $s_i$ is the selected subframe group in the increasing time order.

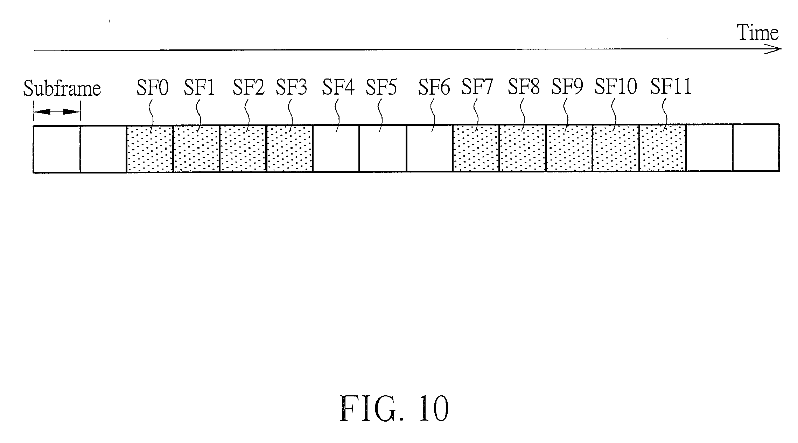

Fig. 10 is a schematic diagram of a subframe allocation via starting subframes and ending subframes of allocated subframes according to an example of the present invention. In Fig. 10, subframes SF0-SF11 are available for resource allocation, and the network may determine to allocate the subframes SF0-SF3 (i.e., the first subframe group) and the subframes SF7-SF11 (i.e., the second subframe group) to the MTC device. The network determines starting subframes as the subframes SF0 and SF7, and determines ending subframes as the subframes SF3 and SF11. The network determines a combinatorial index according to the starting subframes and the ending subframes, and transmits the combinatorial index to the MTC device. Then, the MTC device determines that the subframes SF0-SF3 and SF7-SF11 are available for receiving the PDSCH (or for transmitting the PUSCH) according to the combinatorial index, after receiving the combinatorial index.

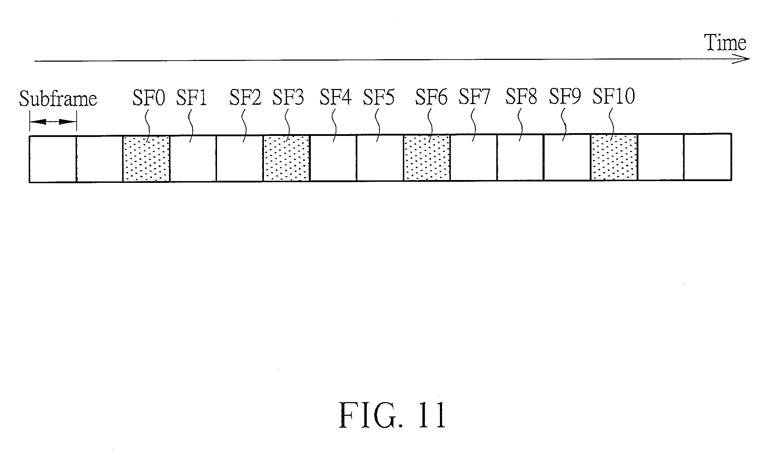

Fig. 11 is a schematic diagram of a subframe allocation via starting subframes of allocated subframes according to an example of the present invention. In Fig. 11, subframes SF0-SF10 are available for resource allocation, and the network may determine to allocate the subframes SF0, SF3, SF6 and SF10 to the MTC device. The network determines starting subframes (i.e., ending subframes) as the subframes SF0, SF3, SF6 and SF10. The network determines a combinatorial index according to the starting subframes, and transmits the combinatorial index to the MTC device. Then, The MTC device determines that the subframes SF0, SF3, SF6 and SF10 are available for receiving the PDSCH (or for transmitting the PUSCH) according to the combinatorial index, after receiving the combinatorial index.

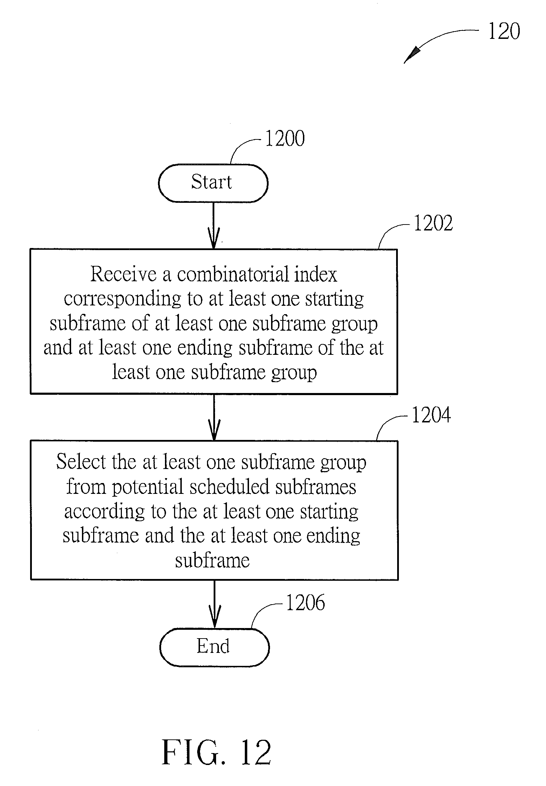

Operations of a MTC device in the above examples can be summarized into a process 120 shown in Fig. 12, and can be compiled into the program code 214. The process 120 includes the following steps:

Step 1200: Start.
Step 1202: Receive a combinatorial index corresponding to at least one starting subframe of at least one subframe group and at least one ending subframe of the at least one subframe group.
Step 1204: Select the at least one subframe group from potential scheduled subframes according to the at least one starting subframe and the at least one ending subframe.
Step 1206: End.

Detailed operations and variations of the process 120 can be referred to the above illustration, and are not narrated herein.

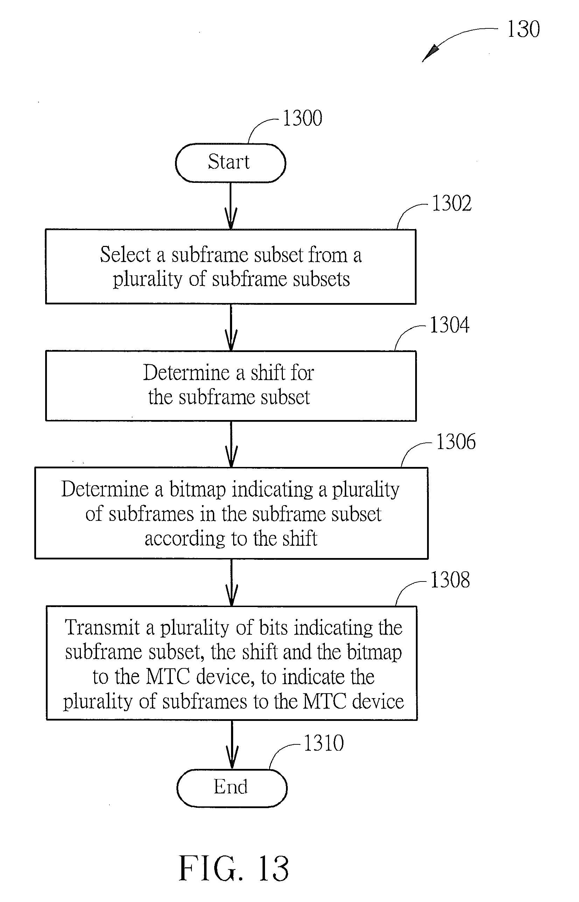

Fig. 13 is a flowchart of a process 130 according to an example of the present invention. The process 130 may be utilized in the network (e.g., an eNB) shown in Fig. 1, to indicate a subframe allocation to a MTC device. The process 130 may be compiled into the program code 214 and includes the following steps:

Step 1300: Start.
Step 1302: Select a subframe subset from a plurality of subframe subsets.
Step 1304: Determine a shift for the subframe subset.
Step 1306: Determine a bitmap indicating a plurality of subframes in the subframe subset according to the shift.
Step 1308: Transmit a plurality of bits indicating the subframe subset, the shift and the bitmap to the MTC device, to indicate the plurality of subframes to the MTC device.
Step 1310: End.

According to the process 130, the network selects a subframe subset from a plurality of subframe subsets, determines a shift for the subframe subset, and determines a bitmap indicating a plurality of subframes in the subframe subset according to the shift. Then, the network transmits a plurality of bits indicating the subframe subset, the shift and the bitmap to the MTC device, to indicate the plurality of subframes to the MTC device. That is, the bitmap and the shift are used for indicating the plurality of subframes in the subframe set, after the subframe set is selected. The plurality of bits are used for representing the subframe subset, the bitmap and the shift, which may correspond to three subsets of the bits, respectively. Thus, the subframe(s) is allocated to the MTC device efficiently.

Realization of the present invention is not limited to the above description.

In one example, a subframe subset (e.g., subframe group subset) $s$, where $0 \leq s < S$, consists of every S th subframe subsets starting from the subframe set $s$. The network may transmit a subframe allocation information consisting of 3 fields to a MTC device, to indicate a plurality of subframes to the MTC device. The first field with $\lceil \log_2(S) \rceil$ bits may be used to indicate a selected subframe subset among the S subframe subsets. The second field with one bit may be used to indicate a shift of subframe allocation within the selected subframe subset. For example, a bit "1" indicates the shift is triggered, and the shift is not triggered otherwise. The third field includes a bitmap, where each bit of the bitmap addresses a corresponding subframe in the selected subframe subset in such a way that a MSB to a LSB of the bitmap are mapped to the subframes in the increasing time order. A subframe in the selected subframe set is allocated to the MTC device if the corresponding bit in the bitmap is "1", and a subframe is not allocated to the MTC device otherwise.

For example, the portion of the bitmap used to address subframes in the selected subframe subset has a size $N_{\text{Subframe}}^{\text{SecondType}}$ and is determined according to $N_{\text{Subframe}}^{\text{SecondType}} = \left\lceil N_{\text{subframe}} / S \right\rceil - \left\lceil \log_2(S) \right\rceil - 1$. The addressable subframe numbers of the selected subframe subset start from an offset, $\Delta_{\text{shift}}(s)$ to the smallest subframe number within the selected subframe subset, which is mapped to the MSB of the bitmap. The offset is in terms of the number of subframes, and is done within the selected subframe subset. For example, if the bit in the second field for the shift is set to 0, the offset for the select subframe subset $s$ determined according to $\Delta_{\text{shift}}(s) = 0$. Otherwise, the offset for the select subframe subset $s$ is determined according to $\Delta_{\text{shift}}(s) = N_{\text{Subframe}}^{\text{SG subset}}(s) - N_{\text{Subframe}}^{\text{SecondType}}$, where the LSB of the bitmap is justified with the highest subframe number within the select subframe subset, where $N_{\text{Subframe}}^{\text{SG subset}}(s)$ is the number of subframes in the select subframe subset $s$.

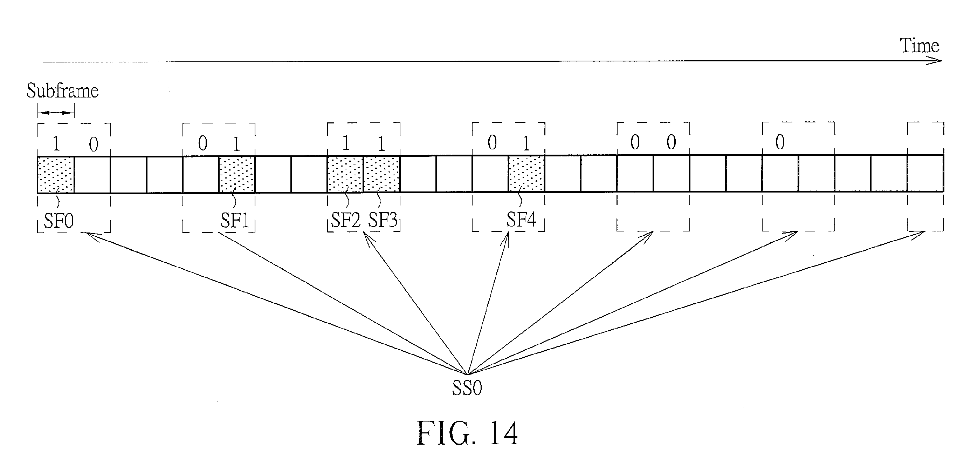

Fig. 14 is a schematic diagram of a subframe allocation via a subframe subset, a shift and a bitmap according to an example of the present invention. In Fig. 14, the network selects a subframe subset SS0 from a plurality of subframe subsets. The network also determines that a shift is not triggered. That is, a bitmap is used from the left side of the subframe subset SSO. Accordingly, the network determines the bitmap as "10011101000", to indicating subframes SF0-SF4 in the subframe subset SS0 to a MTC device. Then, the network transmits bits "0010011101000" to a MTC device, to indicate the subframes SF0-SF4 to the MTC device, wherein the first bit "0" denotes the subframe subset SS0, the second bit "0" denotes that the shift is not used, and the rest bits denote the subframe allocation in the subframe subset SS0. After receiving the bits "0010011101000", the MTC device first selects the subframe subset SS0 from the subframe subsets. Then, the MTC device maps the bitmap to the subframe subset SS0 from the left side of the subframe subset SS0, and determines that the subframes SF0-SF4 are allocated.

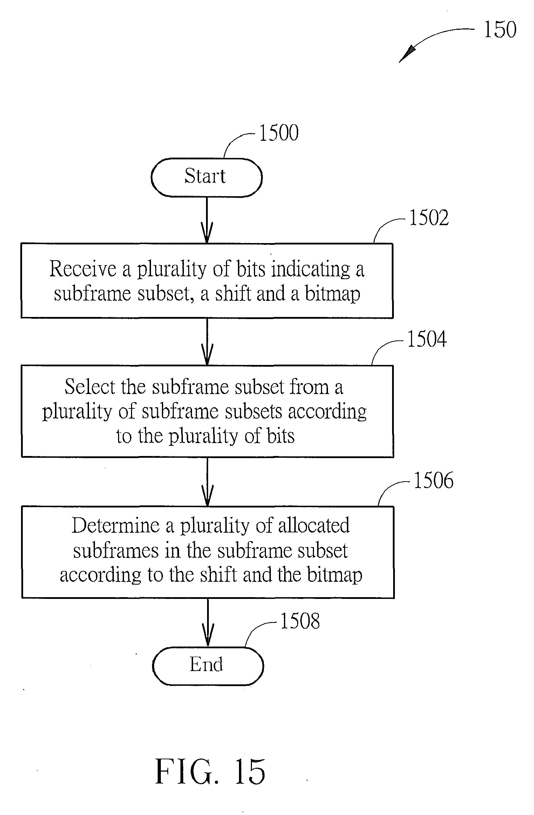

Operations of a MTC device in the above examples can be summarized into a process 150 shown in Fig. 15, and can be compiled into the program code 214. The process 150 includes the following steps:

Step 1500: Start.
Step 1502: Receive a plurality of bits indicating a subframe subset, a shift and a bitmap.
Step 1504: Select the subframe subset from a plurality of subframe subsets according to the plurality of bits.
Step 1506: Determine a plurality of allocated subframes in the subframe subset according to the shift and the bitmap.
Step 1508: End.

Detailed operations and variations of the process 150 can be referred to the above illustration, and are not narrated herein.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

Examples of the hardware may include analog circuit(s), digital circuit (s) and/or mixed circuit(s). For example, the hardware may include ASIC(s), field programmable gate array(s) (FPGA(s)), programmable logic device(s), coupled hardware components or combination thereof. In another example, the hardware may include general-purpose processor(s), microprocessor(s), controller(s), digital signal processor(s) (DSP(s)) or combination thereof.

Examples of the software may include set(s) of codes, set(s) of instructions and/or set(s) of functions retained (e.g., stored) in a storage unit, e.g., a computer-readable medium. The computer-readable medium may include SIM, ROM, flash memory, RAM, CD-ROM/DVD-ROM/BD-ROM, magnetic tape, hard disk, optical data storage device, non-volatile storage unit, or combination thereof. The computer-readable medium (e.g., storage unit) may be coupled to at least one processor internally (e.g., integrated) or externally (e.g., separated). The at least one processor which may include one or more modules may (e.g., be configured to) execute the software in the computer-readable medium. The set(s) of codes, the set(s) of instructions and/or the set(s) of functions may cause the at least one processor, the module(s), the hardware and/or the electronic system to perform the related steps.

Examples of the electronic system may include a system on chip (SoC), system in package (SiP), a computer on module (CoM), a computer program product, an apparatus, a mobile phone, a laptop, a tablet computer, an electronic book or a portable computer system, and the communication device 20.

To sum up, the present invention provides a communication device (e.g., an eNB) for indicating a subframe allocation to a MTC device. According to the present invention, flexibility of cross-subframe scheduling and repetition of transmission are achieved, while signalling overhead needed for a control channel is reduced.

Those skilled in the art will readily observe that numerous modifications and alterations of the device and method may be made while retaining the teachings of the invention. Accordingly, the above disclosure should be construed as limited only by the metes and bounds of the appended claims.

**Claims**

1. A communication device for indicating a subframe allocation to a machine type communication (MTC) device, comprising:

a storage unit for storing instructions of:

selecting at least one subframe group from a plurality of subframe groups;
determining a plurality of subframe allocation bits corresponding to the least one subframe group; and
transmitting the plurality of subframe allocation bits to the MTC device, to indicate the at least one subframe group to the MTC device; and
a processing means, coupled to the storage unit, configured to execute the instructions stored in the storage unit.

2. The communication device of claim 1, wherein a size of each of the plurality of subframe groups is a first fixed value, is a first function of a repetition level of MTC transmission, is a first function of a total number of potential scheduled subframes, is indicated by a first downlink (DL) control information (DCI), or is configured by a first radio resource control (RRC) signaling; and wherein the total number of potential scheduled subframes is a second fixed value, is a second function of the repetition level of MTC transmission, is a second function of the total number of potential scheduled subframes, is indicated by a second DCI or is configured by a second RRC signalling.

3. The communication device of claim 1, wherein the plurality of subframe allocation bits comprises a bitmap.

4. The communication device of claim 1, wherein each of the at least one subframe group comprises consecutive subframes.

5. The communication device of claim 1, wherein the plurality of subframe allocation bits are transmitted via in a DCI to the MTC device; and wherein the at least one subframe group is allocated for a physical DL shared channel (PDSCH) or a physical uplink (UL) shared channel (PUSCH).

6. A communication device for indicating a subframe allocation to a machine type communication (MTC) device, comprising:

   a storage unit for storing instructions of:

      selecting a plurality of subframes from potential scheduled subframes;
      determining a starting subframe of the plurality of subframes and a length of the plurality of subframes; and
      transmitting an indication corresponding to the starting subframe and the length to the MTC device, to indicate the plurality of subframes to the MTC device; and
      a processing means, coupled to the storage unit, configured to execute the instructions stored in the storage unit.

7. The communication device of claim 6, wherein the plurality of subframes are consecutive subframes.

8. The communication device of claim 6, wherein the plurality of subframes are non-consecutive subframes, and a distance between each two neighboring subframes of the plurality of subframes is a fixed value, is indicated by the indication, is configured by a radio resource control (RRC) signalling, or is a function of the potential scheduled subframes.

9. The communication device of claim 8, wherein the indication further corresponds to the distance.

10. The communication device of claim 6, wherein the indication is transmitted via in a downlink (DL) control information (DCI) to the MTC device; and wherein the plurality of subframes is allocated for a physical DL shared channel (PDSCH) or a physical uplink (UL) shared channel (PUSCH).

11. A communication device for indicating a subframe allocation to a machine type communication (MTC) device, comprising:

   a storage unit for storing instructions of:

      selecting at least one subframe group from potential scheduled subframes;
      determining at least one starting subframe of the at least one subframe group and at least one ending subframe of the at least one subframe group; and
      transmitting a combinatorial index corresponding to the at least one starting subframe and the length to the MTC device, to indicate the at least one subframe group to the MTC device; and

   a processing means, coupled to the storage unit, configured to execute the instructions stored in the storage unit.

12. The communication device of claim 11, wherein a size of each of the at least one subframe group is one.

**13.** The communication device of claim 11, wherein each of the at least one subframe group comprises consecutive subframes.

**14.** The communication device of claim 11, wherein a number of the at least one subframe group is a fixed value, or is a function of the potential scheduled subframes.

**15.** The communication device of claim 11, wherein the combinatorial index is transmitted via in a downlink (DL) control information (DCI) to the MTC device; and wherein the at least one subframe group is allocated for a physical DL shared channel (PDSCH) or a physical uplink (UL) shared channel (PUSCH).

—10

| Network |
| --- |

......

| Communication device | | Communication device | | Communication device |
| --- | --- | --- | --- | --- |

......

FIG. 1

20

Program code — 214

Storage unit

210

Processing means — 200

Communication interfacing unit — 220

FIG. 2

30

300

Start

302

Select at least one subframe group
from a plurality of subframe groups

304

Determine a plurality of subframe
allocation bits corresponding to the least
one subframe group

306

Transmit the plurality of subframe allocation
bits to the MTC device, to indicate the at least
one subframe group to the MTC device

308

End

FIG. 3

FIG. 4

50

500

Start

502

Receive a plurality of
subframe allocation bits

504

Select at least one subframe group from
a plurality of subframe groups
according to the plurality of subframe
allocation bits

506

End

FIG. 5

60

600

Start

602

Select a plurality of subframes from
potential scheduled subframes

604

Determine a starting subframe of the
plurality of subframes and a length of
the plurality of subframes

606

Transmit an indication corresponding to
the starting subframe and the length to the
MTC device, to indicate the plurality of
subframes to the MTC device

608

End

FIG. 6

FIG. 7

80

800

Start

802

Receive an indication corresponding to a
starting subframe of a plurality of
subframes and a length of the plurality
of subframes

804

Select the plurality of subframes from
potential scheduled subframes
according to the starting subframe and
the length

806

End

FIG. 8

90

900

Start

902

Select at least one subframe group from potential scheduled subframes

904

Determine at least one starting subframe of the at least one subframe group and at least one ending subframe of the at least one subframe group

906

Transmit a combinatorial index corresponding to the at least one starting subframe and the length to the MTC device, to indicate the at least one subframe group to the MTC device

908

End

FIG. 9

Time

Subframe    SF0  SF1  SF2  SF3  SF4  SF5   SF6  SF7  SF8  SF9  SF10  SF11

FIG. 10

FIG. 11

120

1200

Start

1202

Receive a combinatorial index
corresponding to at least one starting
subframe of at least one subframe group
and at least one ending subframe of the at
least one subframe group

1204

Select the at least one subframe group
from potential scheduled subframes
according to the at least one starting
subframe and the at least one ending
subframe

1206

End

FIG. 12

130

1300

Start

1302

Select a subframe subset from a
plurality of subframe subsets

1304

Determine a shift for
the subframe subset

1306

Determine a bitmap indicating a plurality
of subframes in the subframe subset
according to the shift

1308

Transmit a plurality of bits indicating the
subframe subset, the shift and the bitmap
to the MTC device, to indicate the
plurality of subframes to the MTC device

1310

End

FIG. 13

Time

Subframe

SF0 SF1 SF2 SF3 SF4

SS0

FIG. 14

— 150

— 1500

Start

— 1502

Receive a plurality of bits indicating a
subframe subset, a shift and a bitmap

— 1504

Select the subframe subset from a
plurality of subframe subsets according
to the plurality of bits

— 1506

Determine a plurality of allocated
subframes in the subframe subset
according to the shift and the bitmap

— 1508

End

FIG. 15